# EUROPEAN PATENT APPLICATION

(11) **EP 3 185 502 A1**
(43) Date of publication of application: **28.06.2017**
(21) Application number: 15202619.1
(22) Date of filing: 23.12.2015
(51) Int. Cl.: H04L 29/06, H04L 12/28, H04L 12/46

(54) **SECURE PAYMENT SYSTEM**

(71) Applicant: Mastercard International Incorporated, Purchase NY 10577 (US)
(72) Inventor: AL-AALI, Hasan, Doha (QA)
(74) Representative: Hopley, Joanne Selina

(57) **Abstract**

A method for transmitting payment transaction data between a merchant platform (112) and a vendor platform (114) across a public network (16), the method comprising: creating a tunnel across the public network (16) between the merchant platform (112) and the vendor platform (114) using a tunnelling protocol; extending encryption functionality from the vendor platform (114) to the merchant platform (112) through the tunnel; encrypting the transaction data at the merchant platform (112); and transmitting encrypted transaction data to the vendor platform (114) across the public network (16) through the tunnel.

## Description

### Field of the Invention

The present disclosure relates to secure payment system for card transactions, and to a method of enabling secure card transactions. In particular, but not exclusively, the invention relates to a secure payment system and method for enabling merchants to verify card transactions.

### Background to the Invention

To enable a merchant to accept a card payment from a payment card such as a credit or debit card, sensitive transaction data must be transmitted to a card issuing bank that has issued the payment card in order to authenticate and complete the transaction. Such transaction data may include, for example, a card number, a transaction amount and a merchant identifier. This data must be protected from malicious third parties who may attempt to intercept it during transmission for fraudulent purposes, and so it is important that the data is sent to the card issuer through a secure channel.

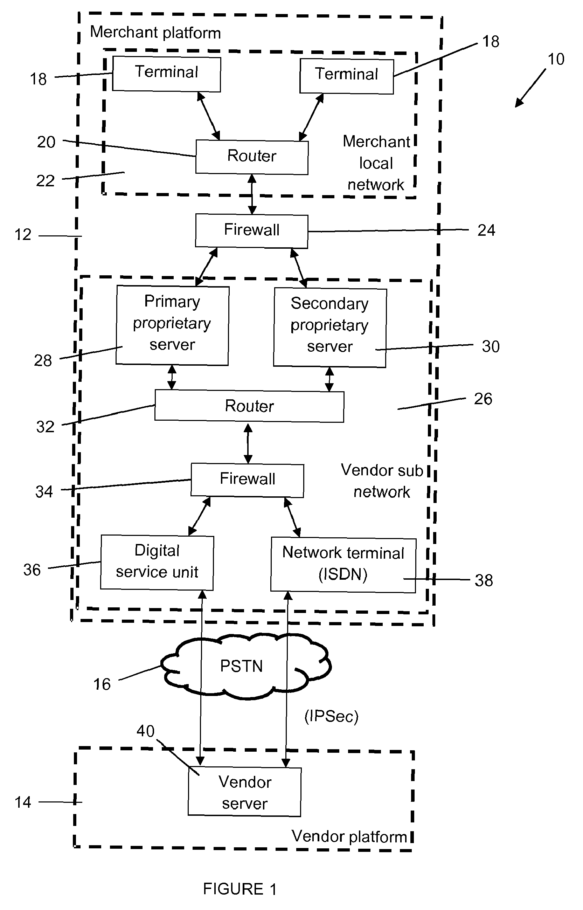

Figure 1 shows an architecture for a known secure payment system 10 that is used for this purpose. The architecture is divided into a merchant platform 12 and a vendor platform 14, each platform representing, respectively, the physical hardware hosted and operated by each party. The merchant platform 12 and the vendor platform 14 are connected through a public switched telephone network (PSTN) 16.

The vendor platform 14 is hosted by a vendor that is capable of authenticating card transaction data. In this example, the vendor is the card issuing bank but in alternative arrangements the vendor may be a payment network such as the Applicant.

The merchant may be, for example, a high-street shop where a customer makes payment by inserting a payment card into a card reader. Card data is extracted automatically by the card reader and compiled with other transaction data such as a merchant identifier prior to transmission of the data to the card issuing bank. Alternatively, the merchant may be an online merchant, in which case a customer enters card details manually through a user interface.

The system 10 shown in Figure 1 includes two terminals 18 in the merchant platform 12, although in practice there may be many more than two. Each terminal 18 may be a physical point of sale, such as the above mentioned card reader, or alternatively the terminals 18 may be servers configured to process card data for e-commerce transactions. In either case, the terminals 18 belong to a common merchant and are connected to a common first router 20 to define a merchant local network 22.

Transaction data is gathered by each terminal 18 and transmitted to the card issuing bank through the first router 20. Incoming and outgoing data from the first router 20 is processed by a first firewall device 24 to protect the merchant local network 22 from malicious third party attacks.

The first firewall device 24 includes network address translation (NAT) functionality which allows it to assume an IP address within an address space defined by the vendor platform 14, effectively hiding the components of the merchant local network 22 from the PSTN 16. This protects the status of the merchant local network 22 as a private network, improving security. Moreover, presenting the first firewall device 24 as residing within the address space of the vendor facilitates routing of data between the merchant platform 12 and the vendor platform 14.

After data passes through the first firewall device 24 it enters a vendor sub-network 26, the components of which are assigned IP addresses within the address space defined by the vendor platform 14. The data follows one of two data paths: a primary data path, and a secondary data path. The vendor sub-network 26 forms part of the merchant platform 12, but is managed by the card issuing bank and contains proprietary hardware that is configured to process and encrypt transaction data before it enters the PSTN 16. In this way, the vendor sub-network 26 creates a secure channel between the merchant platform 12 and the card issuing bank.

Specifically, each data path has a respective proprietary server 28, 30 that is arranged to encrypt the transaction data so that if the transaction data is intercepted by a malicious third party during transmission across the PSTN 16, that party will not be able to access the sensitive information contained within the encrypted transaction data.

The primary and secondary proprietary servers 28, 30 are both connected to a second router 32 which communicates with the PSTN 16 through a second firewall device 34. The primary and secondary data paths also include, respectively, a digital service unit 36 and a network terminal 38, each disposed between the second firewall device 34 and the PSTN 16.

The primary and secondary data paths carry encrypted transaction data across the PSTN 16 to a remote vendor server 40 hosted by the card issuing bank on the vendor platform 14. The vendor server 40 is configured to decrypt, process and verify the transaction data. If the transaction data is verified, the vendor server 40 then returns an authentication code to the terminal 18 of the merchant local network 22 from which the transaction data originated in order to complete the transaction. The authentication code is transmitted along the data path on which the transaction data arrived.

The primary and secondary data paths connect to the vendor platform 14 across the PSTN 16 in fundamentally different ways. This means that a fault affecting one of the data paths is unlikely to affect the other, therefore maximising the probability that one of the data paths will be operational at all times.

In the primary data path, a point-to-point network connection is established between the merchant platform 12 and the vendor platform 14. This connection is managed by the digital service unit 36, which acts as a gateway to the PSTN 16 for the primary data path. As the skilled reader will appreciate, a point-to-point connection is inherently secure, and so the primary data path is the preferred transmission route. Nevertheless, to enhance security, the primary proprietary server 28 associated with the primary data path uses a unique proprietary algorithm to encrypt data before transmitting it across the PSTN 16 through the point-to-point connection.

The secondary data path is provided as a backup option to ensure that the merchant is able to continue using card payment services in the event that the point-to-point connection used for the primary data path is not functioning correctly. For this reason, the secondary data path communicates with the vendor platform 14 using an ISDN-based virtual private network (VPN) that establishes a virtual point-to-point connection under the control of the network terminal 38, which acts as a gateway to the PSTN 16 for the secondary data path.

A typical implementation uses Internet Protocol security (IPsec) to establish the VPN, IPsec being a suite of open-standard security protocols that will be familiar to the skilled person. Within this suite are protocols for establishing mutual authentication between components of each platform at the start and end of each communications session, together with protocols enabling negotiation of cryptographic keys for the encryption of data transmitted through the VPN. This allows data to be transferred securely across the PSTN 16; although it is noted that there is a strong bias away from non-proprietary security measures in the field of payment processing systems, and so the secondary data path is only ever used as a backup.

The vendor server 40 uses multi-protocol-label-switching (MPLS) to handle incoming transaction data from the primary or secondary data paths. As MPLS is protocol independent, this arrangement enables the vendor platform 14 to use a single process to handle data from either the primary or the secondary data path, which as noted above transmit data using different protocols.

Systems such as that described above have developed historically in a context of a desire for ensuring high data integrity across a relatively insecure public network. In order to achieve the desired level of security, it is assumed that proprietary systems are required. However, it will be clear from the above description that the use of proprietary systems necessitated by this approach places a high burden on the merchant in terms of the physical hardware that it must obtain and manage, which is both expensive and time-consuming.

It is against this background that the present invention has been devised.

### Summary of the Invention

According to an aspect of the invention there is provided a method for transmitting payment transaction data between a merchant platform and a vendor platform across a public network, the method comprising: creating a tunnel across the public network between the merchant platform and the vendor platform using a tunnelling protocol; extending encryption functionality from the vendor platform to the merchant platform through the tunnel; encrypting the transaction data at the merchant platform; and transmitting encrypted transaction data to the vendor platform across the public network through the tunnel.

By creating a tunnel between the merchant and vendor platforms and providing encryption functionality from the vendor platform to the merchant platform, beneficially there is no requirement for the merchant platform to include the necessary hardware or software for providing encryption functionality. This reduces the burden on a merchant hosting the merchant platform to acquire, configure and maintain such facilities, in turn avoiding the associated cost in terms of both time and financial expense.

The method may comprise extending authentication functionality from the vendor platform to the merchant platform, and authenticating data received at the merchant platform from the vendor platform. This further minimises the requirements for functionality that the merchant platform must provide.

The method may comprise creating a virtual point-to-point connection between the merchant platform and the vendor platform using the tunnel, therefore making use of a readily available and secure method of connecting the platforms.

In some embodiments, the method comprises defining a respective security gateway on each platform, each gateway representing an endpoint of the tunnel. The gateway at the merchant platform may be, for example, a firewall device.

Advantageously, the method optionally comprises exchanging data between the merchant platform and the vendor platform as packets. In such embodiments, the method may comprise encapsulating each data packet prior to entry to the tunnel.

The tunnelling protocol may be internet-protocol based. For example, the tunnelling protocol may be IPsec protocol, in which case IPsec protocol may also be used to provide encryption. This is a convenient implementation that negates the need to provide proprietary algorithms for securing communications between the platforms, whilst still providing the necessary level of security for sensitive data transmitted through the tunnel.

The inventive concept also extends to a processor configured to perform the method of the above aspect, and to a non-transitory computer-readable medium comprising computer code which when executed causes a processor to perform the method of the above aspect.

Another aspect of the invention provides a vendor platform configured to exchange payment transaction data with a merchant platform across a public network, the vendor platform comprising encryption means and a tunnelling module, the tunnelling module being configured to: create a tunnel across the public network from the vendor platform to the merchant platform using a tunnelling protocol; extend encryption functionality of the encryption means from the vendor platform to the merchant platform through the tunnel; encrypt the transaction data at the merchant platform; and transmit encrypted transaction data to the vendor platform across the public network through the tunnel.

It will be appreciated that preferred and/or optional features of the first aspect of the invention may be incorporated alone or in appropriate combination in the second aspect of the invention also.

### Brief Description of the Drawings

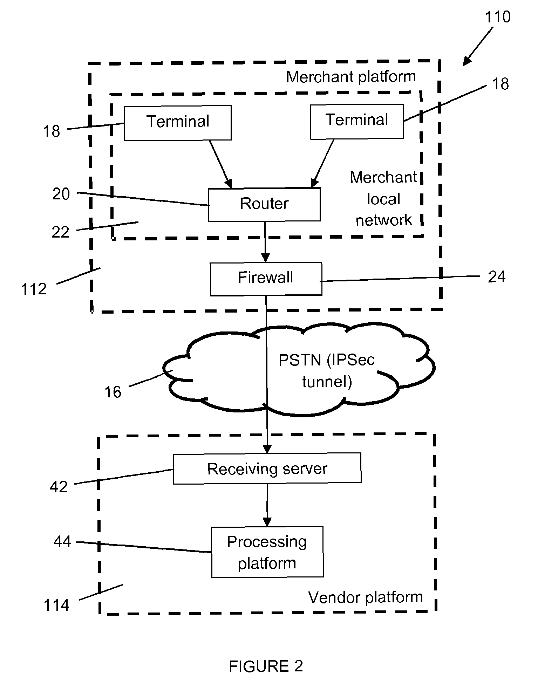

Figure 1 is a schematic illustration of an architecture for a known secure payment system and has already been described. In order that the invention may be more readily understood, preferred non-limiting embodiments thereof will now be described, by way of example only, with reference to Figure 2, which is a schematic illustration of an architecture for a secure payment system according to an embodiment of the invention.

### Detailed Description of Embodiments of the Invention

Figure 2 shows an architecture for a secure payment system 110 according to an embodiment of the invention. As with the conventional system 10 shown in Figure 1, the architecture is divided into a merchant platform 112 and a vendor platform 114 which communicate via a PSTN 16, each platform representing, respectively, the physical hardware hosted and operated by each party.

As in the known arrangement of Figure 1, the vendor is a party which is capable of authenticating transaction data, such as a card issuing bank or a payment network such as the Applicant. The merchant may be a shop where a customer makes payment using a physical payment card, or an online merchant, in which case a customer enters card details manually through a user interface. In either case, card data is obtained from a payment card and compiled with other transaction data such as a merchant identifier prior to transmission of the data to the vendor.

It will be immediately apparent that the merchant platform shown in Figure 2 contains significantly fewer components than the corresponding platform of the known system 10 of Figure 1. Specifically, in contrast with the known system 10, the system 110 of Figure 2 does not include a vendor sub-network, and so does not contain proprietary servers, a second router, a second firewall device, a digital service unit or a network terminal. Moreover, in Figure 2 there is only a single data path in the place of the primary and secondary data paths that are used in the known arrangement.

The reasons for this reduction in system components are outlined below, but it is noted at this point that the omission of the vendor sub-network from the hardware arrangement represents a significant benefit to the merchant which no longer has to acquire, configure and maintain proprietary hardware, thereby avoiding the associated configuration time and financial outlay.

Considering the configuration shown in Figure 2 in more detail, the merchant platform 112 includes a merchant local network 22 which is similar to that of the known arrangement described above with reference to Figure 1. Accordingly, the merchant local network 22 of Figure 2 includes a pair of terminals 18 connected to a common router 20. Many further terminals 18 may be included in the merchant local network 22 in practice. The router 20 is in turn connected to a firewall device 24 which enables the merchant local network 22 to communicate with the PSTN 16.

As in the known arrangement, in the Figure 2 embodiment the firewall device 24 provides NAT functionality and so hides the merchant local network 22 from the PSTN 16, while presenting an IP address within an address space defined by the vendor platform 114 and so facilitating routing of data between the merchant and vendor platforms 112, 114. The firewall device 24 is also arranged to act as an end terminal for a VPN that is established between the merchant platform 112 and the vendor platform 114, as shall become clear in the description that follows.

As Figure 2 shows, the vendor platform 114 includes a receiving server 42 that is arranged to receive incoming transaction data from the PSTN 16, and a processing platform 44 that is arranged to analyse the data to extract the required transaction details, and to verify the transaction.

In a similar arrangement to the secondary path of the known system 10 of Figure 1, in this embodiment transaction data is transmitted from the merchant platform 112 to the receiving server 42 of the vendor platform 114 through a VPN established across the PSTN 16.

Unlike the known arrangement, in this embodiment the merchant platform 112 does not include hardware components that can provide the required functionality for establishing a VPN session. Instead, tunnelling protocols are used by the vendor platform 114 to provide this functionality remotely; tunnelling protocols create a tunnel between a pair of networks to enable the functionality of one network to be extended to the other.

In this case, the vendor platform 114 includes the functionality required to establish a VPN, including encryption and authentication functions. Specifically, these functions are provided by the receiving server 42, which therefore acts as a tunnelling module comprising encryption means and authentication means. So, the tunnel is used to extend these functions from the vendor platform 114 to the merchant platform 112 and thereby enable creation of a VPN between the two.

In simplified terms, the tunnel allows the vendor platform 114 to run encryption and authentication algorithms remotely on a suitable device located on the merchant platform 112. In this embodiment, the firewall device 24 is used in this regard. As tunnelling protocols are standardised and operate within defined programming structures, they can exploit the built-in functionality of conventional devices such as the firewall device 24, which do not require any modification to enable this.

By providing encryption and authentication at each end of the tunnel, the tunnel establishes a secure channel between the merchant platform 112 and the vendor platform 114, thereby protecting the integrity of payment transaction data and payment authentication codes exchanged between the two platforms 112, 114. Incoming encrypted data at the vendor platform 114 is decrypted by the receiving server 42 and passed to the processing platform 4 for authentication.

In this way, the architecture according to the embodiment shown in Figure 2 is capable of providing a similar arrangement to the secondary data path of the conventional arrangement of Figure 1, but without having to provide dedicated components at the merchant platform 112.

Endpoints of the tunnel are defined by a respective security gateway on each platform, i.e. a point at which data enters and exits each platform from the tunnel. The firewall device 24 is used as a gateway on the merchant platform 112, and the receiving server 42 defines the gateway on the vendor platform 114.

Various tunnelling protocols are available that could be used in this application. In this embodiment, IPsec tunnelling protocol is used, as the Applicant has found that this provides the required level of security for a payment processing system. With IPsec tunnelling protocol, data is transmitted in IP data packets, each packet comprising a packet header identifying the nature of the packet, and a payload containing the data. IPsec protocol enables the IP data packets to be exchanged between platforms securely using encryption and authentication, and can be operated in a tunnelling mode in which the data packets are encapsulated by adding a new packet header, thereby protecting the contents of the original packet when transmitted across a public network.

It is noted that due to the omission of proprietary hardware at the merchant platform 112, the transaction data does not undergo any initial encryption according to proprietary algorithms as in the conventional arrangement; in this embodiment the IPsec protocol is entirely relied upon to provide the required encryption to ensure security of the transaction data and so create a secure channel between the merchant platform 112 and the vendor platform 114. This sits in stark contrast with conventional thinking in the art which, as already noted, takes a strong bias towards the use of proprietary security systems.

Although in the above described embodiment a VPN is established between the merchant platform 112 and the vendor platform 114, in a simpler arrangement this may not be necessary and data integrity can be ensured using basic encryption and authentication. As before, encryption and authentication functionality is extended to the merchant platform 112 via the tunnel, as the merchant platform 112 does not have the physical hardware required to execute these functions.

It will be appreciated by a person skilled in the art that the invention could be modified to take many alternative forms to that described herein, without departing from the scope of the appended claims.

## Claims

1. A method for transmitting payment transaction data between a merchant platform (112) and a vendor platform (114) across a public network (16), the method comprising:
creating a tunnel across the public network (16) between the merchant platform (112) and the vendor platform (114) using a tunnelling protocol;
extending encryption functionality from the vendor platform (114) to the merchant platform (112) through the tunnel;
encrypting the transaction data at the merchant platform (112); and
transmitting encrypted transaction data to the vendor platform (114) across the public network (16) through the tunnel.

2. The method of claim 1, comprising extending authentication functionality from the vendor platform (114) to the merchant platform (112), and authenticating data received at the merchant platform (112) from the vendor platform (114).

3. The method of claim 1 or claim 2, comprising creating a virtual point-to-point connection between the merchant platform (112) and the vendor platform (114) using the tunnel.

4. The method of any preceding claim, comprising defining a respective security gateway on each platform, each gateway representing an endpoint of the tunnel.

5. The method of any preceding claim, comprising exchanging data between the merchant platform (112) and the vendor platform (114) as packets.

6. The method of claim 5, comprising encapsulating each data packet prior to entry to the tunnel.

7. The method of any preceding claim, wherein the tunnelling protocol is internet-protocol based.

8. The method of claim 7, wherein the tunnelling protocol is IPsec protocol.

9. The method of claim 8, wherein IPsec protocol is also used to provide encryption.

10. A processor (42) configured to perform the method of any preceding claim.

11. A non-transitory computer-readable medium comprising computer code which when executed causes a processor to perform the method of any of claims 1 to 9.

12. A vendor platform (114) configured to exchange payment transaction data with a merchant platform (112) across a public network (16), the vendor platform (114) comprising encryption means and a tunnelling module, the tunnelling module being configured to:
create a tunnel across the public network (16) from the vendor platform (114) to the merchant platform (112) using a tunnelling protocol;
extend encryption functionality of the encryption means from the vendor platform (114) to the merchant platform (112) through the tunnel;
encrypt the transaction data at the merchant platform (112); and
transmit encrypted transaction data to the vendor platform (114) across the public network (16) through the tunnel.
